(19) **Europäisches Patentamt**
**European Patent Office**
**Office européen des brevets**

(11) **EP 2 280 574 A1**

(12) **EUROPEAN PATENT APPLICATION**
published in accordance with Art. 153(4) EPC

(43) Date of publication:
**02.02.2011 Bulletin 2011/05**

(21) Application number: **09750433.6**

(22) Date of filing: **07.04.2009**

(51) Int Cl.:
***H04W 52/40*** (2009.01)       ***H04W 52/10*** (2009.01)

(86) International application number:
**PCT/JP2009/057098**

(87) International publication number:
**WO 2009/142071 (26.11.2009 Gazette 2009/48)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **22.05.2008 JP 2008134146**

(71) Applicant: **NEC Corporation**
**Minato-ku**
**Tokyo 108-8001 (JP)**

(72) Inventors:
• **NIKI, Takeo**
  **Tokyo 108-8001 (JP)**
• **KITAJIMA, Tasuku**
  **Tokyo 108-8001 (JP)**

(74) Representative: **Glawe, Delfs, Moll**
**Patent- und Rechtsanwälte**
**Postfach 26 01 62**
**80058 München (DE)**

(54) **RADIO COMMUNICATION SYSTEM, BASE STATION, RADIO COMMUNICATION METHOD, PROGRAM**

(57)    A radio communication system includes a terminal and a base station that reports power information in that base station to the terminal. The base station includes: a report period control unit that controls the period of reporting power information in its own base station to be a first period during normal operation and, when its own base station is the handover target of the terminal, controls the report period to be a second period that is shorter than the first period in a fixed interval that follows completion of a handover preparation phase in which a data path for the terminal is generated with a network; and a report unit that reports power information in its own base station to the terminal at the controlled report period.

FIG. 7

**Description**

Technical Field

The present invention relates to a technology for controlling the transmission power of uplink data that are transmitted to a base station from a terminal in a radio communication system.

Background Art

Orthogonal Frequency Division Multiple Access (OFDMA) is receiving attention in recent years as a multiple access method of a radio communication system.

OFDMA is a method of dividing each frequency direction by subcarriers and each time direction by time slots and allotting subcarriers and time slots, in which the subcarriers can be used, to a data transmission origin. OFDMA has been adopted in, for example, WiMAX (Worldwide Interoperability for Microwave Access).

In the case of uplink (UL) in OFDMA, the transmission power and transmission timing in a terminal and the frequency assigned to the terminal are adjusted between the base station and the terminal. This adjustment is referred to as ranging (Patent Document 1). Ranging is carried out at the time of initial entry of a terminal to a base station (for example, entry to the base station that is the handover target during handover of a terminal) and is subsequently carried out periodically.

In the ranging of transmission power among such rangings, a terminal uses the information of the downlink path loss to calculate the uplink data transmission power on the assumption that the path loss in uplink and downlink (DL) are substantially the same. This type of transmission power control is referred to as open-loop power control, and the present invention presupposes the implementation of open-loop power control.

Details of open-loop power control in uplink are next described.

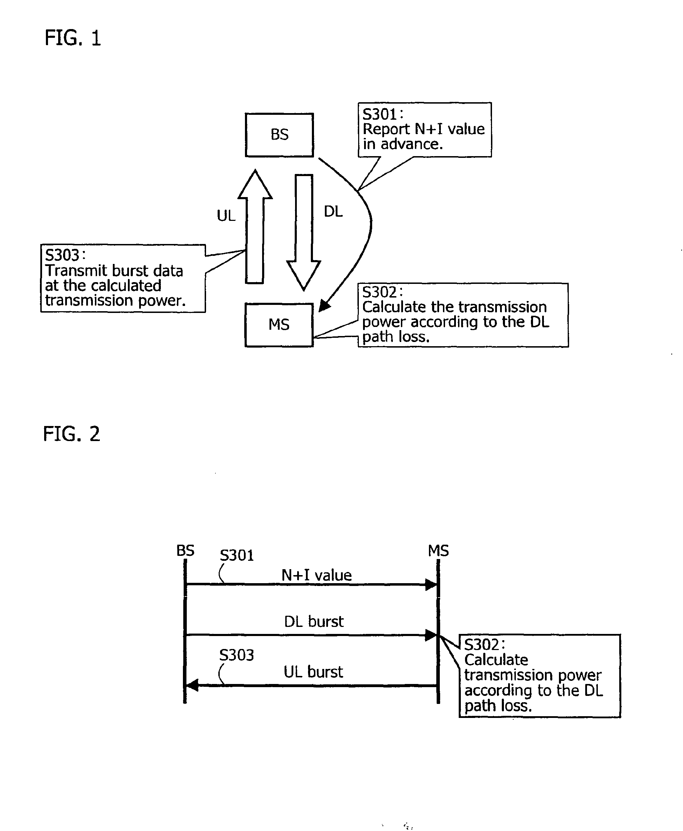

As shown in FIG. 1 and FIG. 2, base station BS in Step S301 reports to terminal MS not only the noise power and interference power (N+I values) of its own station, but also the transmission power of downlink data of its own station and information of the required CINR (Carrier to Interference plus Noise Ratio) value of the modulation in its own station.

In this case, the noise power is the power of the thermal noise produced in the interior of the receiver in base station, and the interference power is the power of disturbance arising from sources other than within base station (for example, interference waves and radiowaves from neighboring cells).

In Step S302, terminal MS next estimates the difference in path loss between downlink and uplink based on the difference between CINR of the downlink data (burst data) received from base station BS and the required CINR, and from this path loss difference, calculates the transmission power of uplink data. As a result, the method of calculating transmission power can be represented by the following Equation 1:

[Equation 1]

$$P(dBm) = L + C/N + NI - 10\log10(R) + Offset\_MS_{perMS} + Offset\_BS_{perMS}$$

where L is the downlink path loss estimated in terminal MS, C/N is the required CINR value of the modulation method in base station BS, NI is noise power and interference power calculated in base station BS, $10\log10(R)$ is the correction value of repetition coding, $Offset\_MS_{perMS}$ is the correction value for each terminal MS, and $Offset\ BS_{PerMS}$ is the correction value for each base station BS.

In Step S303, terminal MS then transmits to the base station BS uplink data (burst data) at the transmission power that was calculated as described above.

However, in open-loop power control in uplink, variations in the radio environment cause the noise power and interference power to differ for each base station BS, resulting in the problem in which terminal MS is unable to accurately calculate the initial transmission power at the time of handover.

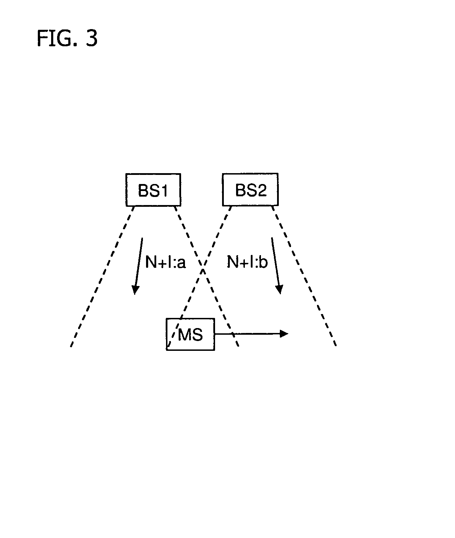

This problem is next described in detail. As shown in FIG. 3, it is here assumed that terminal MS is undergoing handover from base station BS1 to base station BS2. In addition, the N+I values that represent noise power and interference power at base stations BS1 and BS2 are further assumed to be "a" and "b", respectively.

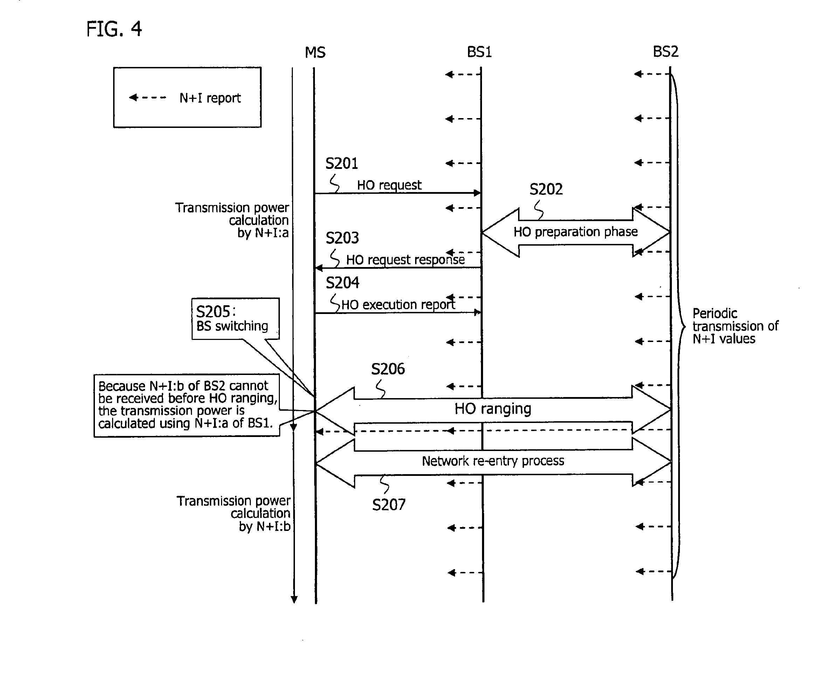

As shown in Figure 4, base station BS1 carries out periodic transmission in which the N+I value "a" is periodically inserted into a downlink frame and broadcast-transmitted to terminal MS that is under its own jurisdiction.

Base station BS2 similarly carries out periodic transmission in which the N+I value "b" is periodically inserted into a downlink frame and broadcast-transmitted to terminal MS that is under its own jurisdiction.

In Step S201, terminal MS transmits to the base station BS1, that is providing service (Serving BS), a handover request message that takes base station BS2 as the handover target base station (Target BS).

In Step S202, a handover preparation phase is then executed between base station BS1 and base station BS2.

In the handover preparation phase, a process is carried out in base station BS1 of reporting to base station BS2 information of terminal MS that is undergoing handover, and in base station BS2, a process is carried out of generating a data path to terminal MS with higher-order network (in the case of WiMAX, the access service network).

Upon completion of the handover preparation phase, base station BS1 transmits to terminal MS a handover request response message in response to the handover request message in Step S203, and terminal MS transmits to base station BS1 a handover execution notification message in Step S204.

Terminal MS subsequently carries out switching from base station BS1 to base station BS2 in Step S205, and in Step S206, executes ranging with base station BS2. This ranging is specially referred to as handover ranging.

Subsequently, a network re-entry process is executed between terminal MS and base station BS2 in Step S207.

In the network re-entry process, a process is carried out in base station BS2 in which terminal MS re-enters the higher-order network (in the case of WIMAX, the access service network) by way of base station BS2.

However, in the interval from the implementation of switching to base station BS2 in Step S205 to the start of handover ranging in Step S206, terminal MS does not receive N+I value "b" from base station BS2 and does not know the N+I value "b".

As a result, when calculating the initial transmission power of uplink data by means of Equation 1 in handover ranging, terminal MS is compelled to use the N+I value "a" of base station BS1.

In this case, the initial transmission power diverges by the portion (a-b) from the transmission power that is calculated using N+I value "b" that is later received from base station BS2 in ranging that is subsequently carried out periodically. The initial transmission power that is calculated in handover ranging is consequently not calculated correctly.

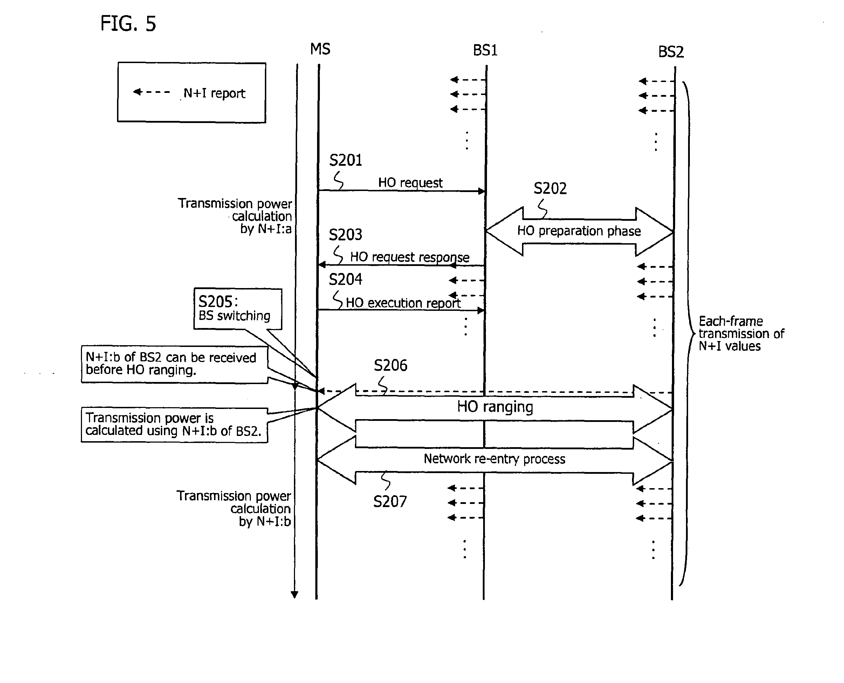

As a method of solving the above-described problem, each-frame transmission can be considered in which, as shown in FIG. 5, base stations BS1 and BS2 insert and transmit N+I values in all downlink frames.

In this case, the period of receiving N+I value "b" from base station BS2 becomes shorter, and terminal MS is therefore able to receive N+I value "b" in the interval from the implementation of switching to base station BS2 in Step S205 until the start of handover ranging in Step S206.

As a result, terminal MS is able to use N+I value "b" of base station BS2 in the handover ranging to correctly calculate the initial transmission power.

However, in the method shown in FIG. 5, the N+I values must be transmitted by all downlink frames, and this necessity imposes constant pressure on the downlink bandwidth.

Patent Document 1: JP 2006-005946 A

Disclosure of the Invention

It is therefore an object of the present invention to provide a radio communication system, a base station, a radio communication method, and a program that can solve the above-described problem without placing constant pressure on the downlink bandwidth.

The radio communication system of the present invention includes a terminal and a base station that reports power information in the base station to the terminal, wherein the base station includes:

a report period control unit that controls the period of reporting power information in its own station to be a first period during normal operation, and when the base station becomes the handover target of the terminal, controls the report period to be a second period that is shorter than the first period in a fixed interval after the completion of a handover preparation phase in which a data path for that terminal is generated with the network; and

a report unit that reports power information in that base station to the terminal at the controlled report period.

The base station of the present invention reports power information in its own station and includes:

a report period control unit that controls the report period of power information in said base station to be a first period during normal operation, and when the base station becomes the handover target of the terminal, controls the report period to be a second period that is shorter than the first period in a fixed interval after the completion of a handover preparation phase in which a data path for the terminal is generated with the network; and

a report unit that reports power information in that base station to the terminal at the controlled report period.

The radio communication method of the present invention is realized by a base station that reports power information in its own station to a terminal, and includes:

a report period control step of controlling the report period of power information in the base station to be a first period during normal operation, and when that base station becomes a handover target of the terminal, controlling the report period to be a second period that is shorter than the first period in a fixed interval after the completion of a handover preparation phase in which a data path for the terminal is generated with the network; and

a report step of reporting power information of the base station to the terminal in the controlled report period.

The program of the present invention causes a base station that reports power information of its own station to a terminal to execute:

a report period control procedure of controlling the report period of power information in the base station to be a first period during normal operation, and when that base station becomes a handover target of the terminal, controlling the report period to be a second period that is shorter than the first period in a fixed interval after the completion of a handover preparation phase in which a data path for the terminal is generated with the network; and

a report procedure of reporting power information of the base station to the terminal in the controlled report period.

According to the present invention, a base station controls the report period of power information to be a first period during normal operation, but when that base station becomes the handover target of a terminal, shortens the report period of power information to be a second period during a fixed interval after the completion of a handover preparation phase.

In this way, the shortening of the report period of power information in a base station is limited to a fixed interval when that base station has become the handover target of a terminal, whereby the effect is obtained of avoiding constant pressure on the downlink bandwidth.

In addition, when a base station has become a handover target, the report period of power information is shortened to a second period in a fixed interval after the completion of the handover preparation phase, whereby the effect is obtained in which the terminal is able to receive notification of the power information of the base station that is the handover target and can correctly calculate the initial transmission power.

Brief Description of the Drawings

FIG. 1 is a view for explaining open-loop power control in uplink;
FIG. 2 is a sequence chart for explaining open-loop power control in uplink;
FIG. 3 is a view for explaining an example of handover in a radio communication system;
FIG. 4 is a sequence chart for describing an example of operations during handover in a related radio communication system;
FIG. 5 is a sequence chart for describing another example of the operations during handover in a related radio communication system;
FIG. 6 shows the configuration of the radio communication system of an exemplary embodiment of the present invention; and
FIG. 7 is a sequence chart for describing an example of the operations during handover in the radio communication system of an exemplary embodiment of the present invention.

Best Mode for Carrying Out the Invention

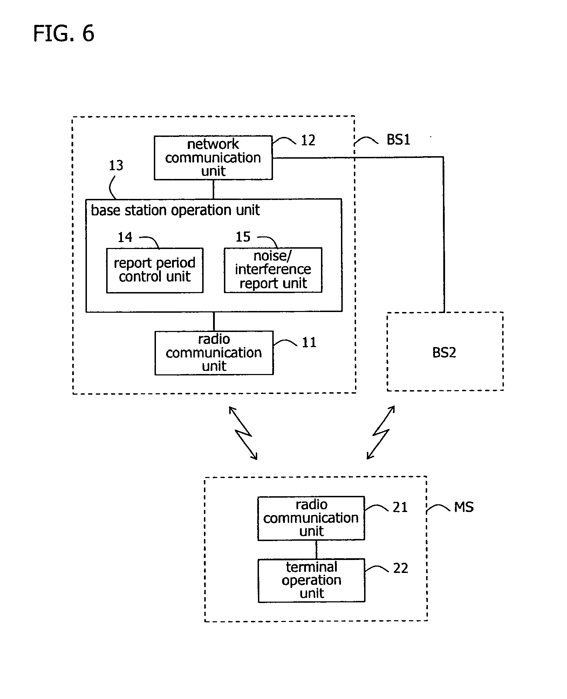

A best mode for working the present invention is next described with reference to the accompanying figures.
In the following exemplary embodiment, an example is offered in which the radio communication system is a WiMAX radio communication system, but the present invention is not limited to this form.
As shown in FIG. 6, the radio communication system of the present exemplary embodiment includes base stations BS1 and BS2 and terminal MS. In FIG. 6, the number of base stations BS and terminals MS is limited to two and one, respectively, to facilitate explanation, but the present invention is not limited to these numbers.
Base station BS1 includes: radio communication unit 11, network communication unit 12, and base station operation unit 13. Although not shown in the figure, base station BS2 also has the same means as base station BS1.
Radio communication unit 11 carries out radio communication with terminal MS.
Network communication unit 12 carries out network communication with the other base stations BS by way of a network.
Base station operation unit 13 includes report period control unit 14 and noise/interference report unit 15.
Report period control unit 14 controls the report period for reporting to terminal MS the noise power and interference power in its own base station.

More specifically, report period control unit 14 controls the report period to be a period (first period) that is an n-multiple of the transmission period of downlink frames to execute periodic transmission of information relating to the noise power and interference power in its own station during normal operation.

When its own base station has become base station BS that is the handover target of terminal MS, report period control unit 14 further controls the report period in a fixed interval to be a period (second period) that is an m-multiple (where 1≤m<n) of the transmission period of downlink frames to begin execution of each-frame transmission of information relating to noise power and interference power in its own base station.

The above-described fixed interval is assumed to be the time interval that starts after the completion of the handover preparation phase and that continues until the completion of the network re-entry process. However, the fixed interval may be the time interval up to the completion of a handover ranging process.

Noise/interference report unit 15 reports the noise power and interference power in its own base station to terminal MS at the report period that is controlled by report period control unit 14.

More specifically, when the report period is being controlled to be the first period and periodic transmission is being executed, noise/interference report unit 15 periodically inserts information relating to the noise power and interference power in its own base station into downlink frames to transmit to terminal MS.

On the other hand, when the report period is being controlled to be the second period and each-frame transmission is being executed, noise/interference report unit 15 inserts information relating to noise power and interference power in its own base station into all downlink frames to transmit to terminal MS.

Although not shown in the figure, base station operation unit 13 also includes other means equivalent to a base station that is typically used in a WiMAX radio communication system. In FIG. 4 and FIG. 5, these means are, for example, means for transmitting and receiving various messages with terminal MS, means for executing the handover preparation phase with other base stations BS, means for executing ranging with terminal MS, and means for executing a network re-entry process with terminal MS. However, because these means are not essential parts of the present invention and are well-known, detailed explanation is here omitted.

Terminal MS includes radio communication unit 21 and terminal operation unit 22.

Radio communication unit 21 carries out radio communication with base stations BS1 and BS2.

Although not shown in the figure, terminal operation unit 22 includes means equivalent to a terminal that is typically used in a WiMAX radio communication system. For example, in FIG. 4 and FIG. 5, these are means for transmitting and receiving various messages with the serving base station BS and means for calculating the transmission power of uplink data during ranging. However, because these means are not parts essential to the present invention and are well known, detailed explanation is here omitted.

The operations during handover in the radio communication system of the present exemplary embodiment are next described. It is here assumed that terminal MS is to be handed over from base station BS1 to base station BS2, as shown in FIG. 3. In addition, N+I values that indicates the noise power and interference power in base stations BS1 and BS2 are assumed to be "a" and "b", respectively.

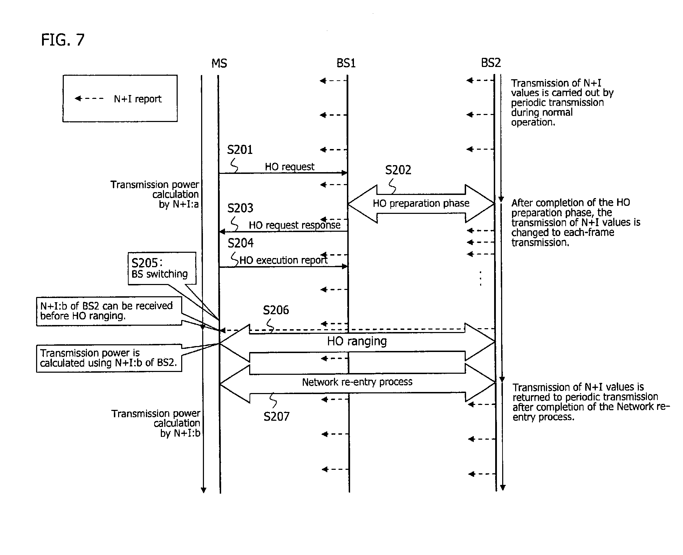

Report period control unit 14 of base station BS1 shown in FIG. 6 executes periodic transmission of N+I value "a" to an extent that does not put pressure on the downlink bandwidth during normal operation, as shown in FIG. 7.

Report period control unit 14 of base station BS2 similarly executes period transmission of N+I value "b" during normal operation.

When terminal MS here transmits in Step 5201 a handover request message to serving base station BS1 that takes base station BS2 as the handover target base station, a handover preparation phase is executed between base station BS1 and base station BS2 in Step S202.

At this point, report period control unit 14 of base station BS2 learns that terminal MS will be handed over. As a result, report period control unit 14 switches the report period and begins execution of each-frame transmission of N+I value "b".

When each-frame transmission of N+I value "b" is thus executed in base station BS2, the period of receiving N+I value "b" from base station BS2 becomes shorter, and terminal MS is therefore able to receive N+I value "b" in the interval from switching to base station BS2 in Step S205 to the start of handover ranging in Step S206.

As a result, terminal MS is able to use N+I value "b" of base station BS2 to correctly calculate the initial transmission power in handover ranging.

Report period control unit 14 of base station BS2 later, after Step S206 or upon completion of the network re-entry process in subsequent Step S207, returns the report period to the state of normal operations and resumes execution of the periodic transmission of N+I value "b".

The execution of each-frame transmission of N+I value "b" in base station BS2 is thus limited to the time interval from completion of the handover preparation phase until the completion of the handover ranging process or the network re-entry process, and constant pressure on the downlink bandwidth can therefore be avoided.

In the present exemplary embodiment as described hereinabove, base station BS controls the report period of noise power and interference power to be the first period during normal operation to execute periodic transmission, but when the base station becomes the handover target of terminal MS, base station BS controls the report period of noise power and interference power to be the second period to execute each-frame transmission in the fixed interval that follows completion of the handover preparation phase and learning that terminal MS is to be handed over.

As a result, the execution of each-frame transmission of noise power and interference power by base station BS is limited to the time interval from the completion of the handover preparation phase until completion of the handover ranging process or the network re-entry process, and constant pressure on the downlink bandwidth is avoided.

In addition, when base station BS becomes a handover target, each-frame transmission is executed in the fixed interval after completion of the handover preparation phase and after learning that terminal MS is to be handed over, whereby terminal MS is able to receive notification of the noise power and interference power of the base station BS that is the handover target and can correctly calculate the initial transmission power.

The method carried out in the base station BS of the present invention may be applied to a program for realizing execution by a computer. Alternatively, this program can be stored in a storage medium, or can be provided to the outside by way of a network.

Although the present invention has been described with reference to an exemplary embodiment, the present invention is not limited to the above-described exemplary embodiment. The constitution and details of the present invention are open to various modifications within the scope of the present invention that will be clear to any one of ordinary skill in the art.

The present application claims priority based on Japanese Patent Application No. 2008-134146 for which application was submitted on May 22, 2008 and incorporates all disclosures of that application.

**Claims**

1. A radio communication system that includes a terminal and a base station that reports power information in said base station to said terminal, wherein said base station comprises:

   a report period control unit that controls the report period of power information in said base station to be a first period during normal operation, and when said base station becomes a handover target of said terminal, controls the report period to be a second period that is shorter than the first period in a fixed interval after completion of a handover preparation phase in which a data path for said terminal is generated with a network; and
   a report unit that reports power information in said base station to said terminal at said controlled report period.

2. The radio communication system as set forth in claim 1, wherein said report period control unit, after completion of the handover preparation phase, returns the report period from said second period to said first period upon completion of a handover ranging process or a network re-entry process in which said terminal re-enters a network by way of said base station.

3. The radio communication system as set forth in claim 1 or claim 2, wherein said report unit:

   inserts power information in its own station into downlink frames at said first period to transmit to said terminal when the report period is controlled to be said first period; and
   inserts power information in its own station into downlink frames at said second period that is shorter than said first period to transmit to said terminal when the report period is controlled to be said second period.

4. The radio communication system as set forth in claim 3, wherein said second period is the transmission period of downlink frames.

5. The radio communication system as set forth in any one of claims 1 to 4, wherein said power information is information relating to noise power and interference power.

6. A base station that reports power information in said base station to a terminal, comprising:

   a report period control unit that controls the report period of power information in said base station to be a first period during normal operation, and when said base station becomes the handover target of said terminal, controls the report period to be a second period that is shorter than the first period in a fixed interval after the completion of a handover preparation phase in which a data path for the terminal is generated with a network; and
   a report unit that reports power information in said base station to said terminal at said controlled report period.

7. The base station as set forth in claim 6, wherein said report period control unit, after completion of a handover preparation phase, returns the report period from said second period to said first period upon completion of a handover ranging process or a network re-entry process in which said terminal re-enters a network by way of said base station.

8. The base station as set forth in claim 6 or claim 7, wherein said report unit inserts power information in said base station into downlink frames at said first period to transmit to said terminal when the report period is controlled to said first period, and inserts power information in said base station into downlink frames at said second period that is shorter than said first period to transmit to said terminal when the report period is controlled to be said second period.

9. The base station as set forth in claim 8, wherein said second period is the transmission period of downlink frames.

10. The base station as set forth in any one of claims 6 to 9, wherein said power information is information relating to noise power and interference power.

11. A radio communication method realized by a base station that reports power information in said base station to a terminal, comprising:

a report period control step of controlling the report period of power information in said base station to be a first period during normal operation, and when said base station becomes a handover target of said terminal, controlling the report period to be a second period that is shorter than the first period in a fixed interval after the completion of a handover preparation phase in which a data path for said terminal is generated with a network; and a report step of reporting power information in said base station to said terminal in said controlled report period.

12. The radio communication method as set forth in claim 11, wherein, in said report period control step, after completion of a handover preparation phase, the report period is returned from said second period to said first period upon completion of a handover ranging process or a network re-entry process in which said terminal re-enters a network by way of said base station.

13. The radio communication method as set forth in claim 11 or claim 12, wherein, in said report step:

power information in said base station is inserted into downlink frames at said first period and transmitted to said terminal when the report period is controlled to said first period, and power information in said base station is inserted into downlink frames at said second period that is shorter than said first period and transmitted to said terminal when the report period is controlled to be said second period.

14. The radio communication method as set forth in claim 13, wherein said second period is the transmission period of downlink frames.

15. The radio communication method as set forth in any one of claims 11 to 14, wherein said power information is information relating to noise power and interference power.

16. A program for causing a base station that reports to a terminal power information in said base station to execute:

a report period control procedure of controlling the report period of power information in said base station to be a first period during normal operation, and controlling the report period to be a second period that is shorter than the first period in a fixed interval after completion of a handover preparation phase in which a data path for said terminal is generated with a network; and a report procedure of reporting power information in said base station to said terminal in said controlled report period.

17. The program as set forth in claim 16, wherein, in said report period control procedure, after completion of the handover preparation phase, the report period is returned from said second period to said first period upon completion of a handover ranging process or a network re-entry process in which said terminal re-enters a network by way of said base station.

18. The program as set forth in claim 16 or 17, wherein, in said report procedure:

power information in said base station is inserted into downlink frames at said first period and transmitted to said terminal when the report period is controlled to said first period; and

power information in said base station is inserted into downlink frames at said second period that is shorter than said first period and transmitted to said terminal when the report period is controlled to be said second period.

**19.** The program as set forth in claim 18, wherein said second period is the transmission period of downlink frames.

**20.** The program as set forth in any one of claims 16 to 19, wherein said power information is information relating to noise power and interference power.

FIG. 1

FIG. 2

FIG. 3

# FIG. 4

N+I report (dashed arrow legend)

Periodic transmission of N+I values

BS2

BS1

MS

S201 — HO request

Transmission power calculation by N+I:a

S202 — HO preparation phase

S203 — HO request response

S204 — HO execution report

S205: BS switching

S206 — HO ranging

Because N+I:b of BS2 cannot be received before HO ranging, the transmission power is calculated using N+I:a of BS1.

S207 — Network re-entry process

Transmission power calculation by N+I:b

# FIG. 5

MS          BS1          BS2

N+I report

S201
HO request

S202

HO preparation phase

Transmission power
calculation
by N+I:a

S203
HO request response

S204
HO execution report

S205:
BS switching

N+I:b of BS2 can be received
before HO ranging.

S206

HO ranging

Transmission power is
calculated using N+I:b of BS2.

Network re-entry process

Transmission power
calculation
by N+I:b

S207

Each-frame
transmission of
N+I values

EP 2 280 574 A1

## FIG. 6

FIG. 7

| MS | BS1 | BS2 |

Transmission of N+I values is carried out by periodic transmission during normal operation.

N+I report

S201
HO request

S202
HO preparation phase

Transmission power calculation by N+I:a

S203
HO request response

After completion of the HO preparation phase, the transmission of N+I values is changed to each-frame transmission.

S204
HO execution report

S205:
BS switching

N+I:b of BS2 can be received before HO ranging.

S206
HO ranging

Transmission power is calculated using N+I:b of BS2.

Network re-entry process

Transmission power calculation by N+I:b

S207

Transmission of N+I values is returned to periodic transmission after completion of the Network re-entry process.

## INTERNATIONAL SEARCH REPORT

| | International application No. |
|---|---|
| | PCT/JP2009/057098 |

A. CLASSIFICATION OF SUBJECT MATTER
*H04W52/40(2009.01)i, H04W52/10(2009.01)i*

According to International Patent Classification (IPC) or to both national classification and IPC

B. FIELDS SEARCHED

Minimum documentation searched (classification system followed by classification symbols)
H04W52/40, H04W52/10

Documentation searched other than minimum documentation to the extent that such documents are included in the fields searched
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2008-514108 A  (LG Electronics Inc.), 01 May, 2008 (01.05.08), Full text & US 2006/0089161 A1    & US 2008/0056195 A1 & WO 2006/080676 A1    & KR 10-2006-0029587 A | 1-20 |
| A | WO 2006/107701 A2  (Interdigital Technology Corp.), 12 October, 2006 (12.10.06), Full text & JP 2008-535401 A      & US 2006/0276189 A1 & EP 1867181 A         & KR 10-2007-0121826 A & KR 10-2008-0002905 A | 1-20 |

☐ Further documents are listed in the continuation of Box C. ☐ See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 25 May, 2009 (25.05.09) | 02 June, 2009 (02.06.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006005946 A
- JP 2008134146 A